# EUROPEAN PATENT SPECIFICATION

(11) **EP 4 373 728 B1**
(45) Date of publication and mention of the grant of the patent: **18.02.2026**
(21) Application number: 22834759.7
(22) Date of filing: 21.07.2022
(51) Int. Cl.: B61D 3/18, B61D 47/00

(54) **RAILWAY TRANSPORT WAGON**
EISENBAHN-TRANSPORTWAGEN
WAGON DE TRANSPORT FERROVIAIRE

(30) Priority: 21.07.2021 PL 43854621
(43) Date of publication of application: 29.05.2024
(73) Proprietor: Nader, Miroslaw, 02-654 Warszawa (PL); Nader, Stanislaw, 03-977 Warszawa (PL)
(72) Inventor: Nader, Miroslaw, 02-654 Warszawa (PL); Nader, Stanislaw, 03-977 Warszawa (PL)
(74) Representative: Marek, Joanna
(86) International application number: PCT/PL2022/000043
(87) International publication number: WO 2023/003483

(56) References cited:
- EP-A1- 2 783 912
- DE-A1- 3 023 514
- DE-A1- 4 222 956
- DE-C1- 19 718 528
- DE-U1- 202006 012 441
- JP-A- H10 119 772
- KR-A- 20110 015 136
- KR-Y1- 200 338 604
- US-A- 3 190 477
- US-A- 5 795 123

## Description

The object of the invention is a railway transport wagon designed in particular for the transport of motor vehicles including in particular trucks and cars as well as containers.

In the state of the art, various types of loading/unloading systems used in rail transport are known. The railway transport wagons used in these systems are designed for a specific type of loading, these include wagons adapted for the transport of motor vehicles or wagons designed for the transport of containers.

An example of a wagon that is designed for the transport of containers may be the two-axle wagon for the transport of containers disclosed in the description of the utility model Ru.066912 characterised in that it comprises wheel sets spring-loaded in short end frames equipped with pins for securing containers; the end frames are connected to each other via a telescopic ridge beam of variable length, the current length of which corresponds to the length of the container currently being transported, its length being fixed by a locking mechanism. The ridge beam consists of at least two tubes of rectangular cross-section, containing overlapping openings of rectangular cross-section, which receive the wedge of the locking mechanism, located transversely and entering the overlapping openings of the tubes of the ridge beam. The wedge is articulated to a lever, which in turn is pivotally fixed to the outer tube of the ridge beam, the position of the lever being maintained by a spring.

It is also known from patent description Pat.201607 a freight wagon underframe with pins for securing containers, the side sills of which are beams containing horizontal top chords and horizontal bottom chords, connected by vertical webs, the vertically positioned pins associated with the top chords being located next to them on the outriggers, characterised in that the webs of the underframes are asymmetrically located with respect to the vertical axis of symmetry of its cross-section so that they are offset in the direction of the pins, the vertical axis of each pin passing through the shear centre of the cross-sectio n of the underframe.

From the Japanese application JPH10119772A is known a floor of a freight car constructed into a double structure, while a rotary shaft, a circular large gear using the rotary shaft as a center, and a plurality wheels are arranged in the bottom of the floor. The floor is held in a receiver for the rotary shaft arranged in a freight car main body so that the upper and lower sides of the floor are connected together and can be rotated in the horizontal direction. A small gear is fixed in a rotary shaft for an electric motor, and the whole of the small gear is arranged in the freight car main body in the position in which it is geared to the large gear. A switch of the motor is turned on, and the floor is rotated around the rotary shaft via the small gear and the large gear, so that an automobile is conveyed in/out from a dedicated home.

From Korean document KR20110015136 is known a freight car capable of loading/ unloading a container comprises a horizontal transfer unit which is composed of a horizontal travel unit, a vertical driving unit, and a supporting unit. The horizontal travel unit reciprocates between the freight car and a trailer on the loaded side of the freight car. The vertical driving unit moves up and down on one side of the horizontal travel unit. The supporting unit moves up and down on the upper side of the vertical driving unit and supports the lower part of a container.

In the case of wagons intended for the transport of containers, one way of restraining the load is by means of elements projecting above the loading surface, for example in the form of pins on which the containers are placed. However, this method makes it impossible to transport motor vehicles on such a wagon, as these elements would damage, for example: vehicle tyres.

The aim of the invention is to provide a universal railway transport wagon that would enable the safe transport of both motor vehicles especially TIRs, semitrailers, special vehicles and containers.

The essence of the invention is a rail transport wagon comprising a chassis equipped with running assemblies and coupling means for coupling with other wagons and/or rail drive vehicles and at least one movable platform, using a drive system mounted on the chassis in a direction perpendicular to the longitudinal axis of the chassis, wherein the drive system comprises at least one motor connected to at least one linkage gear connected to the movable platform, characterised in that the movable platform comprises at least four movable mounts in the form of pins which are mounted above the surface of the movable platform in the extended position and below the surface of the movable platform in the retracted position, and the pins are positioned on a base containing the drive mechanism, the pins being positioned along the longer sides of the movable platform.

The drive mechanism of the pin base is manual or hydraulic or pneumatic or hydraulic-pneumatic or electric.

The drive mechanism of the pin base is provided with a control system.

The control system is manual or electric or remote.

The pin base drive mechanism includes levers.

The pin base drive mechanism includes an electronic control module.

The pins are connected to a single drive mechanism.

Each of the pins has an independent base drive mechanism.

The movable platform comprises preferably eight movable mounts.

The movable platform is provided with at least two beams with rollers located in a direction perpendicular to the longitudinal axis of the chassis, the rollers being located on the side of the chassis and connected to a drive linkage connected to the drive system of the movable platform.

Preferably, the movable platform is provided with at least two rows of rollers located perpendicular to the longitudinal axis of the chassis.

The drive system of the movable platform is connected to the drive mechanism of the pin base.

The drive system of the movable platform is independent of the drive mechanism of the pin base.

The railway transport wagon according to the invention can be used both for the transport of motor vehicles and containers. The use of extendible mounts, which are necessary for the proper securing of containers during transport, also makes it possible to transport motor vehicles without the risk of damaging both the elements of the transported vehicle, e.g.: in the form of wheels and damage to mounts protruding beyond the plane of the platform. As a result, railway wagons can be used for transporting other goods than road sets. Transport by train can be of a mixed nature, and both road vehicles, e.g. TIRs and containers can be transported if required or in order to make efficient use of wagons.

When transporting a motor vehicle on a railway transport wagon, the mounts are inserted below the plane of the movable platform by means of the drive mechanism of the base on which the pin is seated.

The arrangement of the movable mounts on the movable platform corresponds to the size of the containers and their mounts, especially sea containers e.g.: ISO40 or ISO20. In the event that the movable platform contains eight movable mounts, this gives the possibility of safely transporting one ISO40 type container or also two ISO20 type containers.

The invention is illustrated in preferred embodiments in the drawing, in which:
fig. 1 shows a railway transport wagon according to the invention in a schematic side view with the movable mount inserted;
fig. 2 shows a schematic cross-sectional view of the movable mount of the railway transport wagon in the extended position above the surface of the wagon;
fig. 3 shows a schematic cross-sectional view of the movable mount of the railway transport wagon in the retracted position below the surface of the wagon;

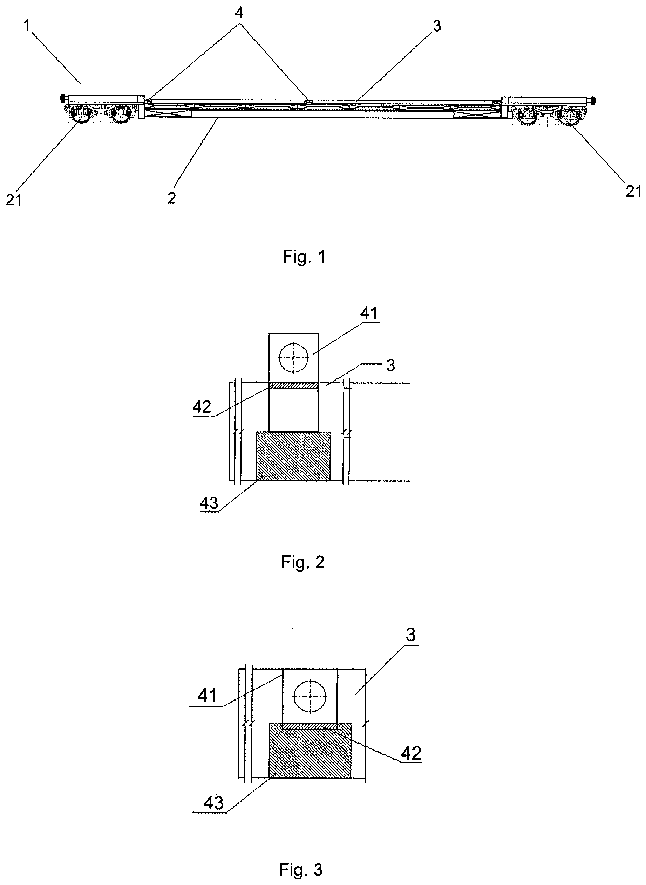

The main components of the railway transport wagon 1 according to the invention shown in fig. 1 are the chassis 2 and the movable platform 3 thereon. The mobile platform 3 interacts with the drive system comprising the engine and the linkage gear allowing the movable platform 3 to be extended onto the unloading ramp. In another embodiment, the movable platform 3 includes beams with rollers (not visible in the figure), which in the first stage are extended to the unloading ramp, and then the movable platform 3 is extended after them. Both the movable platform 3 and the roller beams are connected to the drive system via a motor connected to the linkage system.

Furthermore, the movable platform 3 comprises movable mounts 4 in the form of pins 41 located on bases 42 connected to a single drive mechanism 43. By means of the drive mechanism 43, which in a favourable embodiment is a hydraulic motor, the pins 41 are extended above the surface of the movable platform 3 to secure the container to be transported. The positioning of the movable mounts 4 in the movable platform 3 corresponds to the hooking corners of the containers.

In another embodiment of the invention, eight movable mounts 4 may be used on the mobile platform which would enable two smaller containers (e.g.: IS020) or one large container (e.g.: ISO40) to be transported.

Fig. 2 shows the pin mounted on the base in an extended position above the surface of the movable platform, while fig. 3 shows the pin in the retracted position under the surface of the movable platform.

In the embodiment shown in the fig 2 and fig 3, both the drive mechanism and the pin mounted on the base are placed in a movable platform.

For an expert in the field of invention, it is obvious that a drive mechanism can be used in the form of a hydraulic or electric motor instead of an air motor or other type of motor that can be connected to all movable mounts and each of the movable mounts can have a separate drive mechanism.

In a favourable embodiment, the drive mechanism can also be manual and equipped with the lever necessary to extend the pin permanently located on the base.

If an electric motor is used in the drive mechanism, it is preferably powered by an appropriate electrical connector from the electrical system of the drive unit of the transport unit according to the invention or directly from the overhead contact line.

## Claims

1. A railway transport wagon (1) comprising a chassis (2) equipped with running assemblies (21) and coupling means for coupling with other wagons and/or rail drive vehicles and at least one movable, in a direction perpendicular to the longitudinal axis of the chassis (2), movable platform (3) connected to a drive system mounted on the chassis (2), wherein the drive system comprises at least one motor connected to at least one linkage gear connected to the movable platform, **characterised in that** the movable platform comprises at least four movable mounts (4) in the form of pins (41) which are mounted above the surface of the movable platform (3) in the extended position and below the surface of the movable platform (3) in the retracted position, and the pins (41) are positioned on bases (42) containing a drive mechanism (43), the pins (41) being positioned along the longer sides of the movable platform (3).

2. Railway transport wagon according to claim 1, **characterised in that** the drive mechanism (43) of the base (42) of the pins (41) is manual or hydraulic or pneumatic or hydraulic-pneumatic or electric.

3. Railway transport wagon according to claim 1, **characterised in that** the drive mechanism (43) of the base (42) of the pins (41) is provided with a control system.

4. Railway transport wagon according to claim 4 **characterised in that** the control system is manual or electric or remote.

5. Railway transport wagon according to claim 1 **characterised in that** the drive mechanism (43) of the base (42) of the pins (41) comprises levers.

6. Railway transport car according to claim 1 **characterised in that** the drive mechanism (43) of the base (42) of the pins (41) comprises an electronic control module.

7. Railway transport wagon according to claim 1 **characterised in that** the bases (42) of the pins (41) are connected to one drive mechanism (43).

8. Railway transport wagon according to claim 1 **characterised in that** each base (42) of the pins (41) has an independent drive mechanism (43).

9. Railway transport wagon according to claim 1, **characterised in that** the movable platform (3) preferably comprises eight movable mounts (4).

10. Railway transport wagon according to claim 1, **characterised in that** the movable platform (3) is provided with at least two beams with rollers located in a direction perpendicular to the longitudinal axis of the chassis, the rollers being located on the side of the chassis (2) and connected to a drive linkage connected to the drive system of the movable platform.

11. Railway transport wagon according to claim 1, **characterised in that** the movable platform (3) is equipped with at least two rows of rollers located in a direction perpendicular to the longitudinal axis of the chassis (2).

12. Railway transport wagon according to claim 1, **characterised in that** the drive system of the movable platform (3) is connected to the drive mechanism (43) of the base (42) of the pins (41).

13. Railway transport wagon according to claim 1, **characterised in that** the drive system of the mobile platform (3) is independent of the drive mechanism (43) of the base (42) of the pins (41).

## Patentansprüche

1. Ein Eisenbahnwagen (1) mit einem Fahrgestell (2), das mit Laufwerken (21) und Kupplungsmitteln zum Kuppeln mit anderen Wagen und/oder Schienenfahrzeugen ausgestattet ist, und mindestens einer beweglichen Plattform (3), die in einer Richtung senkrecht zur Längsachse des Fahrgestells beweglich ist und mit einem am Fahrgestell montierten Antriebssystem verbunden ist, wobei das Antriebssystem mindestens einen Motor umfasst, der mit mindestens einem mit der beweglichen Plattform verbundenen Gestänge verbunden ist, **dadurch gekennzeichnet, dass** die bewegliche Plattform mindestens vier bewegliche Halterungen (4) in Form von Stiften (41) umfasst, die in der ausgefahrenen Position über der Oberfläche der beweglichen Plattform (3) und in der eingefahrenen Position unter der Oberfläche der beweglichen Plattform (3) angebracht sind, und die Stifte (41) auf Basen (42) positioniert sind, die einen Antriebsmechanismus (43) enthalten, wobei die Stifte (41) entlang der Längsseiten der beweglichen Plattform (3) positioniert sind.

2. Ein Eisenbahnwagen gemäß Anspruch 1, **dadurch gekennzeichnet, dass** der Antriebsmechanismus (43) der Basis (42) der Stifte (41) manuell oder hydraulisch oder pneumatisch oder hydraulisch-pneumatisch oder elektrisch ist.

3. Ein Eisenbahnwagen gemäß Anspruch 1, **dadurch gekennzeichnet, dass** der Antriebsmechanismus (43) der Basis (42) der Stifte (41) mit einem Steuersystem versehen ist.

4. Ein Eisenbahnwagen gemäß Anspruch 4, **dadurch gekennzeichnet, dass** das Steuersystem manuell oder elektrisch oder ferngesteuert ist.

5. Ein Eisenbahnwagen gemäß Anspruch 1, **dadurch gekennzeichnet, dass** der Antriebsmechanismus (43) der Basis (42) der Stifte (41) Hebel umfasst.

6. Ein Eisenbahnwagen gemäß Anspruch 1, **dadurch gekennzeichnet, dass** der Antriebsmechanismus (43) der Basis (42) der Stifte (41) ein elektronisches Steuermodul umfasst.

7. Ein Eisenbahnwagen gemäß Anspruch 1, **dadurch gekennzeichnet, dass** die Basis (42) der Stifte (41) mit einem Antriebsmechanismus (43) verbunden ist.

8. Ein Eisenbahnwagen gemäß Anspruch 1, **dadurch gekennzeichnet, dass** jede Basis (42) der Stifte (41) einen unabhängigen Antriebsmechanismus (43) aufweist.

9. Ein Eisenbahnwagen gemäß Anspruch 1, **dadurch gekennzeichnet, dass** die bewegliche Plattform (3) vorzugsweise acht bewegliche Halterungen (4) umfasst.

10. Ein Eisenbahnwagen gemäß Anspruch 1, **dadurch gekennzeichnet, dass** die bewegliche Plattform (3) mit mindestens zwei Trägern mit Rollen versehen ist, die senkrecht zur Längsachse des Fahrgestells angeordnet sind, wobei die Rollen an der Seite des Fahrgestells angeordnet und mit einem Antriebsgestänge verbunden sind, das mit dem Antriebssystem der beweglichen Plattform verbunden ist.

11. Ein Eisenbahnwagen gemäß Anspruch 1, **dadurch gekennzeichnet, dass** die bewegliche Plattform (3) mit mindestens zwei Reihen von Rollen ausgestattet ist, die senkrecht zur Längsachse des Fahrgestells angeordnet sind.

12. Ein Eisenbahnwagen gemäß Anspruch 1, **dadurch gekennzeichnet, dass** das Antriebssystem der beweglichen Plattform (3) mit dem Antriebsmechanismus (43) der Basis (42) der Stifte (41) verbunden ist.

13. Ein Eisenbahnwagen gemäß Anspruch 1, **dadurch gekennzeichnet, dass** das Antriebssystem der beweglichen Plattform (3) unabhängig vom Antriebsmechanismus (43) der Basis (42) der Stifte (41) ist.

## Revendications

1. Un wagon de transport ferroviaire (1) comprenant un châssis (2) équipé de bogies (21) et de dispositifs d'attelage pour l'accouplement avec d'autres wagons et/ou véhicules de traction ferroviaires, et au moins une plateforme mobile (3), mobile dans une direction perpendiculaire à l'axe longitudinal du châssis, reliée à un système d'entraînement monté sur le châssis, dans lequel le système d'entraînement comprend au moins un moteur connecté à au moins un engrenage de liaison connecté à la plateforme mobile, **caractérisé en ce que** la plateforme mobile comprend au moins quatre supports mobiles (4) sous forme de goupilles (41) qui sont montées au-dessus de la surface de la plateforme mobile (3) en position déployée et en dessous de la surface de la plateforme mobile (3) en position rétractée, et les goupilles (41) sont positionnées sur des bases (42) contenant un mécanisme d'entraînement (43), les goupilles (41) étant positionnées le long des côtés les plus longs de la plateforme mobile (3).

2. Le wagon de transport ferroviaire selon la revendication 1, **caractérisé en ce que** le mécanisme d'entraînement (43) de la base (42) des goupilles (41) est manuel ou hydraulique ou pneumatique ou hydropneumatique ou électrique.

3. Le wagon de transport ferroviaire selon la revendication 1, **caractérisé en ce que** le mécanisme d'entraînement (43) de la base (42) des goupilles (41) est doté d'un système de commande.

4. Le wagon de transport ferroviaire selon la revendication 4, **caractérisé en ce que** le système de commande est manuel ou électrique ou à distance.

5. Le wagon de transport ferroviaire selon la revendication 1, **caractérisé en ce que** le mécanisme d'entraînement (43) de la base (42) des goupilles (41) comprend des leviers.

6. Le wagon de transport ferroviaire selon la revendication 1, **caractérisé en ce que** le mécanisme d'entraînement (43) de la base (42) des goupilles (41) comprend un module de commande électronique.

7. Le wagon de transport ferroviaire selon la revendication 1, **caractérisé en ce que** les bases (42) des goupilles (41) sont connectées à un unique mécanisme d'entraînement (43).

8. Le wagon de transport ferroviaire selon la revendication 1, **caractérisé en ce que** chaque base (42) des goupilles (41) a un mécanisme d'entraînement (43) indépendant.

9. Le wagon de transport ferroviaire selon la revendication 1, **caractérisé en ce que** la plateforme mobile (3) comprend de préférence huit supports mobiles (4).

10. Le wagon de transport ferroviaire selon la revendication 1, **caractérisé en ce que** la plateforme mobile (3) est pourvue d'au moins deux longerons avec rouleaux situés dans une direction perpendiculaire à l'axe longitudinal du châssis, les rouleaux étant situés du côté du châssis et connectés à une liaison d'entraînement reliée au système d'entraînement de la plateforme mobile.

11. Le wagon de transport ferroviaire selon la revendication 1, **caractérisé en ce que** la plateforme mobile (3) est équipée d'au moins deux rangées de rouleaux situés dans une direction perpendiculaire à l'axe longitudinal du châssis.

12. Le wagon de transport ferroviaire selon la revendication 1, **caractérisé en ce que** le système d'entraînement de la plateforme mobile (3) est connecté au mécanisme d'entraînement (43) de la base (42) des goupilles (41).

13. Le wagon de transport ferroviaire selon la revendication 1, **caractérisé en ce que** le système d'entraînement de la plateforme mobile (3) est indépendant du mécanisme d'entraînement (43) de la base (42) des goupilles (41).
